# EUROPÄISCHE PATENTSCHRIFT

(11) **EP 2 879 931 B1**
(45) Veröffentlichungstag und Bekanntmachung des Hinweises auf die Patenterteilung: **03.04.2019**
(21) Anmeldenummer: 13745651.3
(22) Anmeldetag: 05.08.2013
(51) Int. Cl.: B61C 9/48, H02K 11/00

(54) **GETRIEBEBAUEINHEIT UND ANTRIEBSEINHEIT MIT EINER GETRIEBEBAUEINHEIT**
GEAR MECHANISM UNIT AND DRIVE UNIT COMPRISING A GEAR MECHANISM UNIT
UNITÉ DE TRANSMISSION ET UNITÉ D'ENTRAÎNEMENT POURVUE D'UNE UNITÉ DE TRANSMISSION

(30) Priorität: 06.08.2012 DE 102012213920
(43) Veröffentlichungstag der Anmeldung: 10.06.2015
(73) Patentinhaber: Voith Patent GmbH, 89522 Heidenheim (DE)
(72) Erfinder: HILLMANN, Roland, 89129 Langenau (DE)
(86) Internationale Anmeldenummer: PCT/EP2013/066348
(87) Internationale Veröffentlichungsnummer: WO 2014/023676

(56) Entgegenhaltungen:
- EP-A1- 0 271 678
- EP-A2- 2 273 112
- WO-A1-2004/038241
- WO-A1-2011/148642
- WO-A2-2010/118270
- WO-A2-2012/084576
- DE-A1- 3 144 999
- US-A1- 2005 285 464
- US-B2- 7 136 271

## Beschreibung

Die Erfindung betrifft eine Getriebebaueinheit, geeignet zur Kopplung mit einer elektrischen Antriebsmaschine unter Ausbildung einer Antriebseinheit mit einem Getriebegehäuse, einer im Getriebegehäuse über wenigstens eine Lageranordnung gelagerten und mit einer elektrischen Antriebsmaschine koppelbaren Eingangswelle und einer der Eingangswelle zugeordneten und wenigstens mittelbar mit dem Getriebegehäuse verbundenen Erdungseinrichtung.

Derartige Getriebebaueinheiten sind Bestandteil von Antriebseinheiten in Fahrzeugen, insbesondere Schienenfahrzeugen. Bei diesen ist zur Gewährleistung geringer Baulängen die Antriebsmaschine in unmittelbar räumlicher Nähe zur Getriebebaueinheit angeordnet. Vorzugsweise sind beide - Antriebsmaschine und Getriebebaueinheit - im Bereich ihrer Gehäuse aneinander angeflanscht. Durch diese Maßnahme sind lediglich nur noch ein radiales Lager für die elektrische Antriebsmaschine und ein entsprechendes Lagerschild erforderlich. D.h. der Rotor der elektrischen Antriebsmaschine ist vorzugsweise nur in dem von der Antriebsseite abgewandten Endbereich über eine Lageranordnung im Gehäuse der elektrischen Antriebsmaschine gelagert. Die Ankopplung des Rotors der elektrischen Antriebsmaschine an die Eingangswelle erfolgt antriebsseitig über eine drehsteife und radialsteife Membrankupplung. Die Abstützung der Rotorwelle erfolgt somit über die Lageranordnung der Eingangswelle in der Getriebebaueinheit. Die Getriebebaueinheit selbst ist meist einstufig oder zweistufig ausgeführt. Die Baueinheit aus Antriebsmaschine und Getriebebaueinheit, welche als Antrieb in Quer- oder Längsrichtung ausgeführt ist, wird nur an drei Punkten im primär abgefederten Drehgestellrahmen befestigt. Eine mögliche Antriebsanordnung für Schienenfahrzeuge mit sich auf der Getriebeeingangswelle abstützender Antriebswelle eines elektrischen Fahrmotors ist beispielsweise aus DE 3144 999 A1 bekannt.

Die aufgrund frequenzveränderlicher Steuerungen an der elektrischen Antriebsmaschine induzierten elektrischen Spannungen bedingen jedoch Ströme, die über die Rotorwelle und bei Ausführung der Kupplung zwischen Rotorwelle und Eingangswelle als starre Metallkupplung in die Lageranordnung eingetragen werden. Diese Ströme führen zu Funkenerosion, die Schmelzkrater, ein Fressen und Profilierung der Lagerlaufflächen und damit ernsthafte Lagerschäden verursacht. Zur Vermeidung wurde daher eine Antriebseinheit vorgeschlagen, welche an der von der elektrischen Antriebsmaschine abgewandten Seite der Getriebebaueinheit im Bereich der zweiten Lageranordnung der Eingangswelle in der Getriebebaueinheit eine Erdungseinrichtung, vorsieht, umfassend einen, die Eingangswelle oder ein drehfest mit dieser verbundenes Bauteil in Umfangsrichtung umschließenden und mit dem Gehäuse verbundenen Erdungsring. Die Anordnung des Erdungsringes und dessen Lagefixierung am Getriebegehäuse bedingt jedoch eine gegenüber Ausführungen frei von einer Erdungseinrichtung komplexere Gestaltung des Gehäusedeckels auf der von der elektrischen Antriebsmaschine abgewandten Getriebeseite, insbesondere in Form eines Labyrinthdeckels. Es hat sich jedoch gezeigt, dass auch mit dieser Erdungsanordnung die Lageranordnungen der Eingangswelle trotzdem nur unzureichend schützbar sind und die Lagerschäden nicht in ausreichender Weise eliminierbar sind.

Die Problematik der Schädigung von Lageranordnungen einer Rotorwelle einer elektrischen Antriebsmaschine ist allgemein aus dem Firmenprospekt Morgan Rekofa GmbH: "MorganAM&T Aegis SGR™ Wellenerdungssystem", vorbekannt. In diesem wird zur Vermeidung ein Lagerschutz vorgeschlagen, der durch auf die Rotorwelle aufschiebbare Erdungsringe charakterisiert ist. Dabei erfolgt die Anordnung zumindest auf der Antriebsseite der elektrischen Antriebsmaschine am Gehäuse der elektrischen Maschine und schützt somit die mit der Rotorwelle gekoppelten Baueinheiten vor den schädlichen Strömen.

Weitere Ausführungen von Erdungsanordnungen sind beispielsweise aus WO 2010/118270 bekannt.

Bei einer speziellen Ausführung eines Antriebsstranges einer Windturbinenanlage gemäß der EP 2 273 112 A2 ist das Getriebegehäuse Bestandteil des Generatorgehäuses. In dieser erfolgt die Anordnung einer Erdungseinrichtung zwischen dem Rotor und dem Getriebegehäuse.

Der Erfindung liegt die Aufgabe zugrunde, eine Getriebebaueinheit der eingangs genannten Art derart weiterzuentwickeln, dass mit dieser beim Einsatz in Antriebseinheiten mit einer elektrischen Antriebsmaschine die genannten Nachteile sicher vermieden werden, insbesondere Lagerschäden, bedingt durch unerwünschte Ströme ausgeschlossen werden, wobei gleichzeitig auf eine axial kurze Bauweise der Antriebseinheit bei Kopplung mit einer Antriebsmaschine abgestellt werden soll.

Die erfindungsgemäße Lösung ist durch die Merkmale der Ansprüche 1 und 10 charakterisiert. Vorteilhafte Weiterentwicklungen sind jeweils in den Unteransprüchen wiedergegeben.

Eine Getriebebaueinheit, geeignet zur Kopplung mit einer elektrischen Antriebsmaschine unter Ausbildung einer Antriebseinheit mit einem Getriebegehäuse, einer im Getriebegehäuse über wenigstens eine Lageranordnung gelagerten und mit einer elektrischen Antriebsmaschine koppelbaren Eingangswelle und einer der Eingangswelle zugeordneten und mittelbar mit dem Getriebegehäuse verbundenen Erdungseinrichtung, ist erfindungsgemäß dadurch gekennzeichnet, dass die Erdungseinrichtung auf der Eingangsseite der Eingangswelle in das Getriebegehäuse in Kraftflussrichtung vor der ersten Lageranordnung angeordnet ist.

Erfindungsgemäß ist die mittelbare Verbindung der Erdungseinrichtung mit dem Getriebegehäuse als Verbindung der Erdungseinrichtung mit einem Gehäusedeckel ausgeführt, wobei der Gehäusedeckel mit dem Getriebegehäuse verbunden ist und zur Durchführung der Eingangswelle dient und wobei die Erdungseinrichtung direkt oder indirekt über eine Adaptereinrichtung mit dem Gehäusedeckel verbunden sein kann. Dadurch ist lediglich der Gehäusedeckel zur Realisierung der Verbindung mit der Erdungseinrichtung zu modifizieren. Am Getriebegrundgehäuse sind keine konstruktiven Änderungen erforderlich.
"mittelbar verbunden" bedeutet, dass die Kopplung beziehungsweise Verbindung zwischen zwei Bauteilen indirekt, beispielsweise durch Verbindung über weitere zwischengeordnete Bauteile erfolgen kann.

Unter der Eingangsseite der Eingangswelle in das Getriebegehäuse wird die Seite der Getriebebaueinheit verstanden, auf welcher bei Kopplung mit einer Antriebsmaschine das Drehmoment eingeleitet wird.

Der Begriff "Welle" ist funktional zu verstehen. Dieser umfasst alle drehbar um eine Achse gelagerten Bauteile. Wellen liegen vorzugsweise als Hohl- oder Vollwelle vor.

Die erfindungsgemäße Verlagerung der Erdungseinrichtung zur Eingangsseite der Getriebebaueinheit bietet den Vorteil, dass bereits die in Kraftflussrichtung erste Lageranordnung der Eingangswelle im Getriebegehäuse vor den schädlichen Strömen durch Ableitung vor dieser über das Getriebegehäuse geschützt wird. Die durch die Betriebsweise der elektrischen Antriebsmaschine erzeugten schädlichen Ströme werden somit gar nicht erst in die Getriebebaueinheit eingetragen.

Durch die Zuordnung der Erdungseinrichtung zur Getriebebaueinheit kann auf die Erdungsanordnung an der elektrischen Antriebsmaschine und damit eine Modifizierung dieser zur Anordnung einer Erdungseinrichtung verzichtet werden. Dadurch ist diese Ausführung besonders für sich einseitig in der Getriebebaueinheit abstützende Rotorwellen elektrischer Maschinen geeignet, da diese neben einem geringen Bauraumbedarf einen optimalen Schutz bietet.

Die Anordnung der Erdungseinrichtung erfolgt somit zwischen der im Getriebegehäuse gelagerten Welle, insbesondere Eingangswelle und dem Getriebegehäuse, womit eine Zuordnung zum Getriebe gegeben ist und die Getriebebaueinheit bereits mit der Erdungseinrichtung vormontiert angeboten werden kann. Ein Schutz der Lageranordnungen ist unabhängig von der Art der mit der Eingangswelle gekoppelten elektrischen Maschine gegeben.

Die Erdungseinrichtung umfasst dazu zumindest ein Bauteil aus der nachfolgenden Gruppe:
- ein sich über wenigstens einen Teilbereich des Außenumfanges der Eingangswelle oder eines drehfest mit dieser verbundenen Bauteiles in Umfangsrichtung erstreckendes Erdungsringsegment, zur einfachen Montage und Demontage beispielsweise ein sich bis zu 180° um den Außenumfang der Eingangswelle oder eines drehfest mit dieser verbundenen Bauteiles in Umfangsrichtung erstreckendes Erdungsringsegment;
- eine Erdungsringeinheit, gebildet aus einem in Umfangsrichtung geschlossenen ausgeführten Erdungsring oder zumindest zwei in Umfangsrichtung unter Ausbildung einer Trennfuge benachbart angeordneten Erdungsringsegmenten.

Im erstgenannten Fall ist durch den genannten Winkelbereich die Funktionsweise gewährleistet. Die Verwendung zumindest eines Erdungsringsegmentes bietet den Vorteil einer einfacheren Demontage dessen im Falle eines erforderlichen Austauschs ohne die Verbindung zwischen der Getriebebaueinheit und einer Antriebsmaschine aufheben zu müssen.

Die Verwendung einer Erdungsringeinheit bietet einen optimalen Schutz. Diese ist einfach zu montieren und koaxial zur Eingangswelle oder einem drehfest mit dieser verbundenen Bauteil angeordnet. In einer ersten Ausbildung ist die Erdungseinrichtung von zumindest einem in Umfangsrichtung geschlossen ausgeführten Erdungsring gebildet. Dies erlaubt eine einfache Montage.

In einer zweiten Ausbildung ist die Erdungseinrichtung aus zumindest zwei in Umfangsrichtung benachbart angeordneten Erdungsringsegmenten gebildet. Diese Lösung bietet den Vorteil, bei erforderlichem Austausch, insbesondere Demontage nicht die gesamte Verbindung von Antriebseinheit und Getriebebaueinheit lösen zu müssen und erlaubt ein Lösen der Verbindungen auch in einem begrenzten Zugangsbereich in Umfangsrichtung, indem die einzelnen Segmente in Umfangsrichtung gegenüber der Eingangswelle verdreht werden.

Erdungsringsegment oder Erdungsring können als standardisierte Bauteile bezogen werden. Stellvertretend wird hinsichtlich möglicher Ausbildungen auf das Firmenprospekt Morgan Rekofa GmbH: "MorganAM&T Aegis SGR™ Wellenerdungssystem" und US 7,136,271 verwiesen, deren Offenbarungsgehalt bezüglich der konstruktiven Ausbildungen und des Aufbaus der Erdungsringe vollumfänglich mit einbezogen werden. Die Erdungsringsegmente oder Erdungsringe umfassen im Allgemeinen jeweils eine Bürstenanordnung und eine Halterung für die Bürstenanordnung, wobei die Dimensionierung im Hinblick auf den konkreten Einsatzfall derart erfolgt, dass immer ein ausreichender Kontakt der Bürsten mit dem stromführenden Bauteil, d.h. der Eingangswelle oder einem drehfest mit dieser verbundenen Bauteil gewährleistet ist.

In einer vorteilhaften Ausbildung ist die Getriebebaueinheit derart vormontiert, dass bereits ein Kupplungsteil, geeignet zur Kopplung mit dem Rotor der elektrischen Antriebsmaschine, wenigstens mittelbar drehfest mit der Eingangswelle verbunden ist. Die Erdungseinrichtung ist in axialer Richtung parallel zur Drehachse der Eingangswelle betrachtet zwischen Kupplungsteil und erster Lageranordnung angeordnet. Bei dieser Ausbildung kann ohnehin vorhandener Bauraum in axialer Richtung zwischen dem Kupplungsteil und Getriebegehäuse optimal für die Anordnung der Erdungseinrichtung genutzt werden.

Das Kupplungsteil kann beispielhaft als Kupplungsteil einer Ganzmetallkupplung oder einer starren Membrankupplung ausgeführt sein.

Die Verbindung mit dem Gehäusedeckel kann entweder direkt oder indirekt über eine Adaptereinrichtung erfolgen. Die direkte Verbindung bedingt zwar eine Abstimmung zwischen Erdungseinrichtung und Anschlussumgebung am Getriebegehäuse, bietet aber den Vorteil einer besonders platzsparenden Bauweise. Die Anordnung der Erdungseinrichtung gegenüber dem Getriebegehäuse und damit Lagezuordnung ist hier als Funktion der Geometrie und Dimensionierung dieser sowie der Ausbildung der Verbindung im Einzelnen bestimmt.

Demgegenüber bietet die indirekte Verbindung über eine Adaptereinrichtung den Vorteil der freien Anpassbarkeit der Lagezuordnung von Erdungseinrichtung und Getriebegehäuse zueinander in Abhängigkeit von der Ausführung der Adaptereinrichtung. Ferner bietet die Adaptereinrichtung den Vorteil, auf standardisierte Gehäusedeckel beziehungsweise Anschlussbereiche am Getriebegehäuse zurückgreifen zu können, unabhängig von der Art der Anbindung der Erdungseinrichtung.

Die Verbindungen zwischen Erdungseinrichtung und Getriebegehäuse oder Adaptereinrichtung und/oder die Verbindung der Adaptereinrichtung mit dem Getriebegehäuse ist in einer Weiterentwicklung als eine Verbindung oder Kombination von Verbindungen aus folgender Gruppe ausgeführt:
- formschlüssige Verbindung
- kraftschlüssige Verbindung.

Die Auswahl der Verbindung erfolgt in Abhängigkeit der konkreten Anforderungen des Einzelfalls. Zur Realisierung der einzelnen Verbindungsarten sind an den betroffenen Anschlusselementen jeweils die entsprechenden Verbindungsmittel vorzusehen.

In einer besonders vorteilhaften Weiterentwicklung ist eine der vorgenannten Verbindungen zwischen Erdungseinrichtung und Getriebegehäuse oder Adaptereinrichtung und/oder die Verbindung der Adaptereinrichtung mit dem Getriebegehäuse derart ausgeführt, dass die Erdungseinrichtung und/oder die Adaptereinrichtung relativ zum Getriebegehäuse in axialer Richtung verstellbar, insbesondere verschiebbar ist. Diese Lösung bietet den Vorteil einer freien Einstellbarkeit der Lagezuordnung zwischen Getriebegehäuse und Erdungseinrichtung. Insbesondere können mit dieser Ausführung auch Anordnungen in Anschlussebenen erfolgen, die gegenüber der ersten Lageranordnung der Eingangswelle in Richtung Getriebeinnenraum versetzt angeordnet sind.

Um bei in Umfangsrichtung in Abständen erfolgender Befestigung der Erdungseinrichtung auch ein Lösen dieser über einen stark begrenzten Zugangsbereich in Umfangsrichtung betrachtet zu ermöglichen, ist gemäß einer weiteren vorteilhaften Weiterbildung der vorgenannten Verbindungen zweier Bauteile aus der Gruppe nachfolgend genannter Verbindungen
- Verbindung zwischen Getriebegehäuse und Adaptereinrichtung;
- Verbindung zwischen Adaptereinrichtung und Erdungseinrichtung;
- Verbindung zwischen Erdungseinrichtung und Getriebegehäuse
diese derart ausgeführt, geeignet zu sein, in einer ersten Funktionsstellung der beiden miteinander zu verbindenden Bauteile zueinander eine ortsfeste Lagezuordnung, insbesondere Verbindung zwischen diesen zu erzeugen und nach Lösen der ortsfesten Verbindung eine Relativbewegung der Adaptereinrichtung und/oder der Erdungseinrichtung in Umfangsrichtung um die Eingangswelle in einem Winkelbereich bis zu 270° zu ermöglichen. Diese Lösung ist insbesondere bei bereits montierten Antriebseinheiten mit Erdungseinrichtungen, gebildet aus Erdungsringsegmenten und erforderlichem Austausch der Erdungseinrichtung von Vorteil, wenn beispielsweise im Getriebegehäuse im Erstreckungsbereich der Anordnungsebene der Erdungseinrichtung eine Öffnung vorgesehen ist. Eine aufwendige komplette Demontage der gesamten Antriebseinheit kann dann entfallen.

Die konkrete Ausführung der einzelnen Verbindungen kann vielgestaltig erfolgen. Die kraftschlüssige Verbindung der Erdungseinrichtung oder der Adaptereinrichtung mit dem Getriebegehäuse oder die kraftschlüssige Verbindung der Erdungseinrichtung mit der Adaptereinrichtung ist entsprechend zumindest einer Merkmalskombination aus der nachfolgenden Gruppe oder einer Kombination aus diesen ausgeführt:
- Pressverbindung;
- Schraubverbindung;
- Klemmverbindung.

Die formschlüssige Verbindung der Erdungseinrichtung oder der Adaptereinrichtung mit dem Getriebegehäuse oder die formschlüssige Verbindung der Erdungseinrichtung mit der Adaptereinrichtung ist entsprechend zumindest einer Merkmalskombination aus der nachfolgenden Gruppe oder einer Kombination aus diesen ausgeführt:
- in Umfangsrichtung der Eingangswelle betrachtet einseitig wirkender Formschluss;
- in Umfangsrichtung der Eingangswelle betrachtet beidseitig wirkender Formschluss;
- Klipp- oder Schnappverbindung.

Erdungseinrichtungen sind in vielfältiger Ausbildung aus dem Stand der Technik vorbekannt. Hier kann auf standardisierte Bauteile zurückgegriffen werden, die insbesondere bei Verwendung einer Adaptereinrichtung keine Modifikation am Getriebegehäuse erfordern.

In einer weiteren und mit wenigstens einer der vorgenannten Ausführungen und Ausbildungen kombinierbaren Ausführung ist der getriebeeingangsseitige Gehäusedeckel unter Ausbildung eines Labyrinths zwischen der Lagerumgebung der ersten Lagerstelle und der Eingangswelle und/oder einem mit diesem drehfest verbundenen Element ausgeführt. Dadurch wird ein Übertritt an Schmiermedium in den Bereich der Erdungseinrichtung sicher vermieden.

Vorzugsweise ist eine Getriebebaueinheit mit einem oder einer Kombination der vorgenannten Merkmale Bestandteil einer Antriebseinheit für ein Fahrzeug, insbesondere ein schienengebundenes Fahrzeug. Die Antriebseinheit umfasst desweiteren eine elektrische Antriebsmaschine mit einem Rotor, wobei der Rotor auf der Antriebsseite frei von einer Lagerung im Gehäuse der elektrischen Antriebsmaschine ist und mit der Getriebebaueinheit unter Abstützung über die erste Lageranordnung im Getriebegehäuse verbindbar ist.

In einer weiteren Anwendung erfolgt der Einsatz einer Getriebebaueinheit mit antriebsseitiger Erdungseinrichtung in einer Antriebseinheit mit einer eine eigene Rotorlagerung aufweisenden elektrischen Antriebsmaschine, die über eine Ausgleichskupplung, insbesondere Bogenzahnkupplung mit der Getriebebaueinheit verbunden ist. Für diese Antriebseinheiten können herkömmliche Standardantriebsmaschinen zum Einsatz gelangen, frei von zusätzlichen Maßnahmen zum Schutz der Lagerung der elektrischen Antriebsmaschine.

Eine besonders vorteilhafte Anwendung ist der Einsatz in Radantriebseinheiten. Die Getriebebaueinheit umfasst dazu ein Radsatzgetriebe, dessen Ausgangswelle über eine Gelenkkupplung mit einer Radantriebswelle, insbesondere der Radsatzwelle gekoppelt ist.

Die erfindungsgemäße Lösung wird nachfolgend anhand von Figuren erläutert. Darin ist im Einzelnen folgendes dargestellt:
- Figur 1a: zeigt in schematisiert stark vereinfachter Darstellung eine Anordnung einer Erdungseinrichtung in einer Antriebseinheit;
- Figur 1b: zeigt in schematisiert stark vereinfachter Darstellung eine Anordnung einer Erdungseinrichtung in einer Antriebseinheit mit sich in der Getriebebaueinheit abstützender Rotorwelle der Antriebsmaschine;
- Figur 1c: zeigt eine Getriebebaueinheit in Form eines Radsatzgetriebes;
- Figuren 2a bis 2c: zeigen beispielhaft mögliche Ausführungen einer Erdungseinrichtung;
- Figur 3a: zeigt die direkte Anordnung der Erdungseinrichtung am Getriebegehäuse;
- Figur 3b: zeigt beispielhaft eine indirekte Anbindung der Erdungseinrichtung am Getriebegehäuse;
- Figur 4a: zeigt anhand eines Axialschnittes eine erste Ausführung der direkten Anordnung einer Erdungseinrichtung am Getriebegehäuse;
- Figur 4b: zeigt in einer Ansicht A die Erdungseinrichtung und den Gehäusedeckel;
- Figur 5a: zeigt anhand eines Axialschnittes eine zweite Ausführung der direkten Anordnung einer Erdungseinrichtung am Getriebegehäuse;
- Figur 5b und 5c: zeigen in einer Ansicht A die Erdungseinrichtung und den Gehäusedeckel;
- Figur 6a: zeigen anhand eines Axialschnittes eine erste und zweite Ausführung der indirekten Ankopplung einer Erdungseinrichtung am Getriebegehäuse über eine Adaptereinrichtung;
- Figur 6b und 6c: zeigen in einer Ansicht A die Erdungseinrichtung und den Gehäusedeckel;
- Figur 7: zeigt eine nicht beanspruchte Anbindung der Erdungsringeinheit an eine Wandung des Getriebegehäuses.

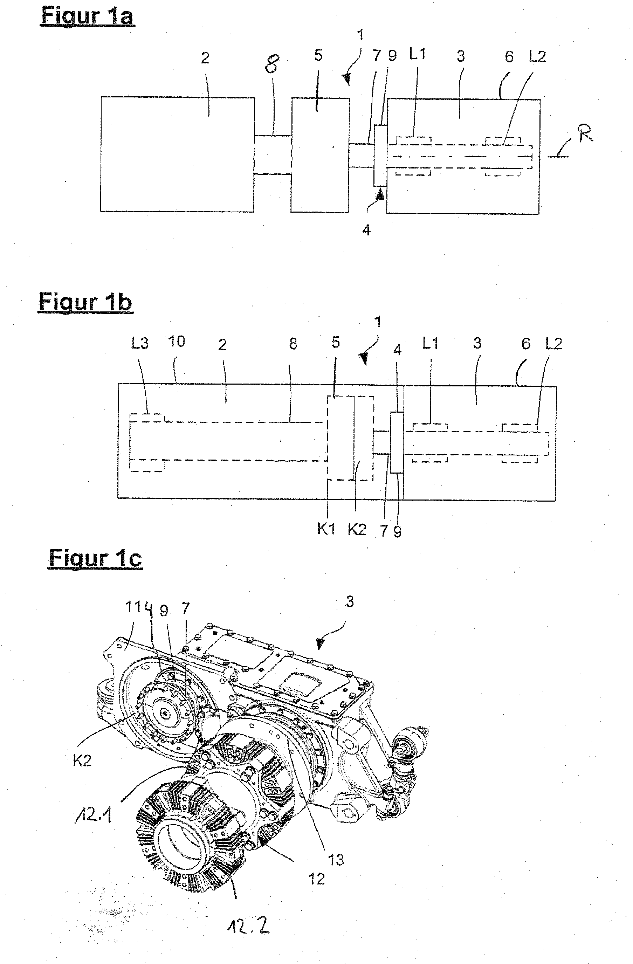

Die Figur 1a zeigt in schematisiert stark vereinfachter Darstellung eine Antriebseinheit 1, umfassend eine elektrische Antriebsmaschine 2 und eine Getriebebaueinheit 3 mit erfindungsgemäßer Anordnung einer Erdungseinrichtung 4, vorzugsweise als Erdungsringeinheit 9 oder einzelnes Erdungsringsegment ausgeführt. Die elektrische Antriebsmaschine 2 ist als Wechselstrommaschine, beispielsweise Asynchronmaschine ausgeführt. Die Getriebebaueinheit 3 ist mit der Antriebsmaschine 2 wenigstens mittelbar, im dargestellten Fall beispielsweise über eine starre Kupplungseinrichtung 5 gekoppelt. Die Getriebebaueinheit 3 umfasst ein Getriebegehäuse 6, zumindest eine im Getriebegehäuse 6 über wenigstens eine Lageranordnung L1, hier zwei Lageranordnungen L1 und L2 gelagerte und mit der elektrischen Antriebsmaschine 2 koppelbare Eingangswelle 7. Die Eingangswelle 7 stützt sich in Kraftflussrichtung von der Antriebsmaschine 2 zur Getriebebaueinheit 3 betrachtet eingangsseitig an der Lageranordnung L1 und mit ihrem von der Kopplung mit der Antriebsmaschine 2 abgewandten Endbereich über die Lageranordnung L2 wenigstens mittelbar am Getriebegehäuse 6, d.h. direkt oder über mit diesem ortsfest verbundene Bauelemente ab. Die Rotorwelle 8 der elektrischen Antriebsmaschine 2 ist über die Kupplungseinrichtung 5 mit der Eingangswelle 7 verbunden. Die Verbindung kann je nach Ausführung der Eingangswelle 7 und der Rotorwelle 8 in Richtung parallel zur Drehachse R der Eingangswelle 7 betrachtet, hier jedoch nicht dargestellt, innerhalb des Getriebegehäuses 6 oder, wie in Figur 1a dargestellt, außerhalb des Getriebegehäuses 6 erfolgen. Zum Schutz der Lageranordnungen L1 und L2 in der Getriebebaueinheit 3 ist die Erdungseinrichtung 4, umfassend eine die Eingangswelle 7 oder ein drehfest mit dieser verbundenes Bauteil wenigstens über einen Teilbereich in Umfangsrichtung umschließende und wenigstens mittelbar mit dem Getriebegehäuse 6 verbundene Erdungseinrichtung 4, vorgesehen, die auf der Eingangsseite für die Eingangswelle 7 in das Getriebegehäuse 6 koaxial zur Eingangswelle 7 diese über wenigstens einen Teilbereich in Umfangsrichtung umschließend in Kraftflussrichtung vor der ersten Lageranordnung L1 angeordnet ist. Die Rotorwelle 8 der elektrischen Antriebsmaschine 2 ist in diesem Fall beidseitig im Gehäuse der elektrischen Antriebsmaschine 2 gelagert.

Zeigt die Figur 1a beispielhaft eine mögliche Ausführung einer Antriebseinheit 1, verdeutlicht Figur 1b eine besonders vorteilhafte Ausführung mit in Richtung der Längsachse der Eingangswelle 7 verkürzter Bauweise. Bei dieser ist das Gehäuse 10 der elektrischen Antriebsmaschine 2 an das Getriebegehäuse 6 angeflanscht. Die Rotorwelle 8 der elektrischen Antriebsmaschine 2 ist nur einseitig im Gehäuse 10 gelagert. Die Lagerung im Gehäuse 10 der elektrischen Antriebsmaschine 2 erfolgt im dem antriebsseitigen Endbereich der Rotorwelle 8 gegenüberliegenden Endbereich über eine Lageranordnung L3. Im antriebsseitigen Endbereich ist die Rotorwelle 8 mit der Eingangswelle 7 der Getriebebaueinheit 3 wenigstens mittelbar, hier über eine Kupplungseinrichtung 5 gekoppelt und stützt sich über diese an der Lageranordnung L1 der Eingangswelle 7 ab. Dazu ist die Rotorwelle 8 im antriebsseitigen Endbereich mit einem Kupplungsteil K1 drehfest verbunden, welches wenigstens mittelbar, vorzugsweise direkt mit einem, mit der Eingangswelle 7 drehfest verbundenen Kupplungsteil K2 in Wirkverbindung steht. Die Erdungseinrichtung 4, die auch hier als Erdungsring 9 oder einzelnes Erdungsringsegment ausgeführt sein kann, ist in axialer Richtung parallel zur Drehachse der Eingangswelle 7 betrachtet zwischen dem mit diesem verbundenen Kupplungsteil K2 und der ersten Lageranordnung L1 in Kraftflussrichtung im Getriebe angeordnet. Vorzugsweise ist diese am Getriebegehäuse 6 befestigt. Die Befestigung am Getriebegehäuse 6 erfolgt vorzugsweise ortsfest.

In der in Figur 1b dargestellten Ausführung ist die durch die Kupplungseinrichtung 5 definierte Kopplungsebene zwischen Rotorwelle 8 und Eingangswelle 7 örtlich vor der ersten Lageranordnung L1 angeordnet. Denkbar ist es aber auch, die Kopplungsebene örtlich in Längsrichtung der Drehachse R der Eingangswelle 7 betrachtet, hinter der ersten Lageranordnung L1 anzuordnen. In diesem Fall ist die Erdungseinrichtung 4 trotzdem in Kraftflussrichtung vor der Lageranordnung 1 angeordnet, kann jedoch räumlich in Richtung hinter dieser angeordnet sein.

Die Kupplungseinrichtung 5 kann als starre Kupplung, vorzugsweise Metallkupplung ausgeführt sein.

Die Figur 1c verdeutlicht eine erfindungsgemäße Anordnung der Erdungseinrichtung 4 in Form einer Erdungsringeinheit 9 oder eines Erdungsringsegmentes an einer Getriebebaueinheit 3 für den Einsatz in einer Antriebseinheit zum Antrieb mindestens einer, mit mindestens einem Rad gekoppelten Radantriebswelle in einer Antriebseinheitskonfiguration gemäß Figur 1b. Zur drehfesten Kopplung der hier nicht dargestellten Rotorwelle 8 der Antriebsmaschine 2 ist die Eingangswelle 7 drehfest mit einem Kupplungsteil K2 verbunden. Zur Ankopplung der Antriebsmaschine 2, insbesondere des Gehäuses 10 an das Getriebegehäuse 6 ist an diesem ein Lagerschild 11 angeordnet. Dieses bildet Flanschflächen zur Anordnung von Befestigungsmitteln und Anlage von komplementär dazu ausgeführten Anlageflächen am Gehäuse 10 der Antriebsmaschine 2. Das Kupplungsteil K2 ist Bestandteil einer drehsteifen und in radialer Richtung steif ausgeführten Membrankupplung. Die Getriebebaueinheit 3 umfasst hier einen Abtrieb 13, welcher von einer, die Radsatzwelle in Umfangsrichtung und über wenigstens einen Teil ihrer axialen Erstreckung umschließenden Hohlwelle gebildet wird. Diese ist über eine Gelenkkupplung 12 mit der Radsatzwelle verbunden. Die Gelenkkupplung 12 umfasst dabei einen ersten Kupplungsteil 12.1 und einen zweiten Kupplungsteil 12.2 , welche miteinander drehelastisch verbindbar sind. Der erste Kupplungsteil 12.1 ist dabei mit dem Abtrieb 13, insbesondere der Hohlwelle drehfest verbunden. Der zweite Kupplungsteil 12.2 ist mit der Radsatzwelle wenigstens mittelbar drehfest gekoppelt.

Wenigstens mittelbar bedeutet dabei, dass die Anbindung direkt an die Radsatzwelle oder aber über weitere Übertragungselemente z. B. einer weiteren Kupplungsebene erfolgt. In einer vorteilhaften Ausgestaltung sind die Hohlwelle und der erste Kupplungsteil 12.1 der Gelenkkupplung 12 einteilig ausgeführt.

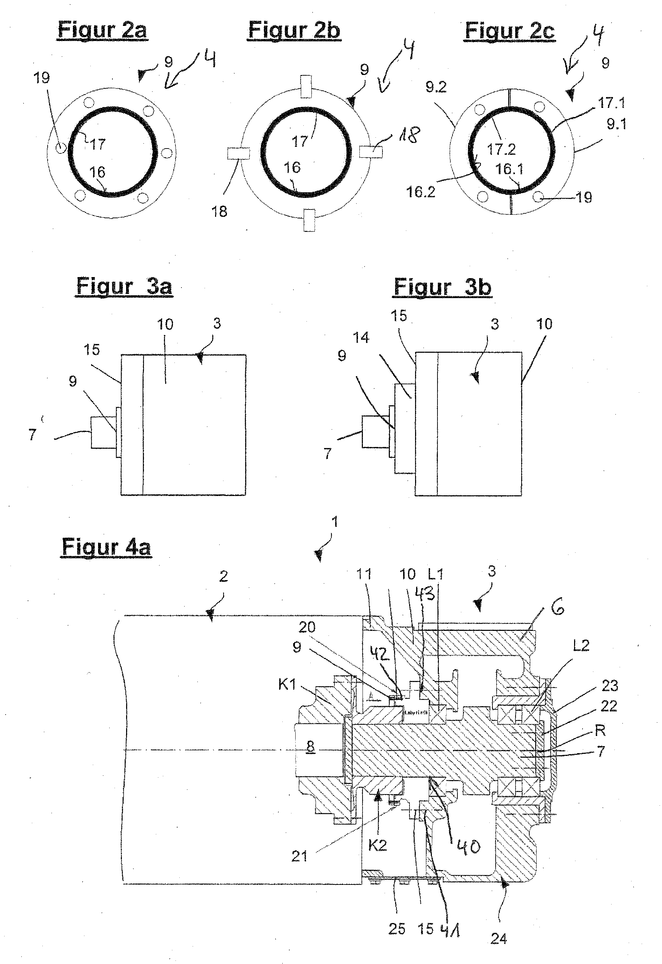

Die Figuren 2a bis 2c verdeutlichen beispielhaft mögliche Ausführungen einer Erdungseinrichtung 4, insbesondere einer Erdungsringeinheit 9. Diese besteht gemäß den Figuren 2a und 2b aus einem ringförmigen metallischen Element, welches am Innenumfang 16 derart ausgeführt ist, eine Halteeinrichtung für Bürsten 17 zu bilden. Vorzugsweise ist das ringförmige Element aus Aluminium ausgeführt. Der Innendurchmesser des ringförmigen Elementes und die Länge der Bürsten 17 sind dazu derart gewählt, dass die Erdungseinrichtung 4 in Einbaulage einen zuverlässigen Kontakt zwischen den Bürsten 17 und der Eingangswelle 7 beziehungsweise einem drehfest mit dieser verbundenen Bauteil ermöglicht. Die Erdungseinrichtung 4 umfasst ferner Mittel zur Realisierung einer zumindest mittelbaren Verbindung mit dem Getriebegehäuse 6. Diese können vielgestaltig ausgeführt sein. Im einfachsten Fall gemäß Figur 2a sind lediglich Durchgangsöffnungen 19, die sich durch die Erdungseinrichtung 4 erstrecken, vorgesehen. Diese sind entweder mit fest definierten oder frei wählbaren, konstantem oder verändertem Abstand zueinander in Umfangsrichtung der Erdungseinrichtung 4 angeordnet. Durch diese können Befestigungselemente zur Kopplung mit dem Getriebegehäuse 6 oder einem mit diesem verbundenen Bauteil geführt werden. In einer alternativen Ausführung kann die Durchgangsöffnung 19 auch mit einem Gewinde versehen sein.

Die Figur 2b zeigt eine Ausbildung einer Erdungseinrichtung 4 mit sich in radialer Richtung von diesem erstreckend angeordneten Vorsprüngen 18, die entweder als Formschlusselemente selbst Bestandteil einer Verbindung sein können oder aber als Anordnungsbereiche für die Durchgangsöffnungen oder Gewindebohrungen fungieren. In einer weiteren hier nicht dargestellten Ausbildung können separate Halteklammern vorgesehen werden, die an den Anschlussbauteilen für die Erdungseinrichtung 4 fixiert, insbesondere befestigbar sind und mit dem ringförmigen Element der Erdungseinrichtung 4 formschlüssig oder kraftschlüssig zusammenwirken.

Zeigen die Figuren 2a und 2b Beispiele für in Umfangsrichtung geschlossene Ausbildungen der Erdungseinrichtung 4 als Erdungsringeinheit 9, verdeutlicht Figur 2c eine Ausbildung mit einer zumindest zweigeteilt ausgeführten Erdungseinrichtung 4. Diese umfasst zwei Erdungsringsegmente 9.1 und 9.2, die in Analogie zur ringförmig ausgeführten und in Umfangsrichtung geschlossenen Erdungsringeinheit 9 aufgebaut sind. Diese weisen an der in Einbaulage in Umfangsrichtung um die Eingangswelle 7 oder um einen radialen Außenumfangsbereich eines drehfest mit dieser verbundenen Bauteils verlaufenden und zu diesem weisenden Innenumfangsbereich 16.1, 16.2 auf, an welchen jeweils Bürsten 17.1, 17.2 angeordnet sind. Die einzelnen Erdungsringsegmente 9.1, 9.2 sind in Umfangsrichtung benachbart zueinander unter Ausbildung einer Trennfuge angeordnet.

Jedes der einzelnen Erdungsringsegmente 9.1, 9.2 weist eigene Mittel zur Realisierung von Verbindungen mit Anschlussteilen auf, im dargestellten Fall beispielhaft ebenfalls in Form von Durchgangsöffnungen 19.

Nicht dargestellt in den Figuren 2a bis 2c ist eine Ausbildung einer Erdungseinrichtung 4 mit Eignung zum Einpressen in einen Bestandteil des Getriebegehäuses 6. Die zur Realisierung der Pressverbindung vorgesehene Fläche kann dazu beispielhaft vom Außenumfang der Erdungseinrichtung 4 gebildet werden.

Die in den Figuren 2a bis 2c dargestellten Ausführungen sind beispielhaft und der Einsatz von Erdungseinrichtungen 4 ist nicht auf diese beschränkt.

Die Figuren 3a und 3b zeigen mögliche Anordnungen einer Erdungseinrichtung 4 an einem Getriebegehäuse 6. Gemäß Figur 3a erfolgt die Anordnung der Erdungseinrichtung 4 direkt am Gehäusedeckel 15. Der Gehäusedeckel 15 dient der Durchführung der Eingangswelle 7. An den miteinander zu verbindenden Komponenten - Gehäusedeckel 15 und Erdungseinrichtung 4 - sind dazu entsprechende Mittel zur Realisierung der Verbindung vorzusehen.

Demgegenüber zeigt die Figur 3b eine alternative Anbindung der Erdungseinrichtung 4 am Gehäusedeckel (15) über eine Adaptereinrichtung 14, die als Halteeinrichtung für die Erdungseinrichtung 4 fungiert. Die Adaptereinrichtung 14 kann unterschiedliche Funktionen übernehmen. Neben der Halte- und Fixierfunktion kann die Adaptereinrichtung 14 auch Lage- und Toleranzausgleichsfunktionen übernehmen.

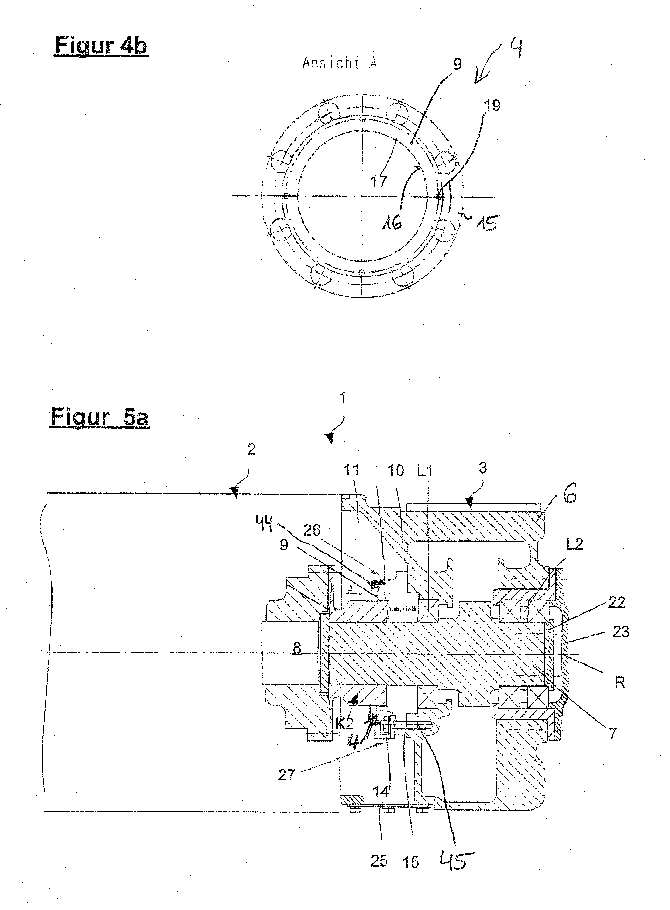

Die mittelbare Verbindung der Erdungseinrichtung 4 mit dem Getriebegehäuse 6 wird als Verbindung der Erdungseinrichtung 4 mit dem Gehäusedeckel 15 realisiert, wobei die Verbindung mit dem Gehäusedeckel 15 entweder direkt oder indirekt über eine Adaptereinrichtung 14 ausgeführt ist. Die einzelnen Verbindungen können kraft- und/oder formschlüssig ausgeführt werden. Beispiele für konkrete Ausführungen der Verbindungen sind in den nachfolgenden Figuren 4 bis 7 wiedergegeben.

Die Figur 4a zeigt in einem Axialschnitt in Einbaulage durch die Eingangswelle 7 einen Ausschnitt aus einer Antriebseinheit 1 mit elektrischer Antriebsmaschine 2 und Getriebebaueinheit 3. Die Schnittebene ist durch die Drehachse R der Eingangswelle 7 und einer Senkrechten dazu in vertikaler Richtung charakterisiert. Erkennbar sind die beiden Lageranordnungen L1 und L2 für die Eingangswelle 7 in der Getriebebaueinheit 3. Das Getriebegehäuse 6 weist eingangsseitig eine Durchgangsöffnung für die Eingangswelle 7 auf. Im Bereich dieser stützt sich die Eingangswelle 7 über die erste Lageranordnung L1 am Getriebegehäuse 6 ab. Die Durchgangsöffnung ist über einen Gehäusedeckel 15 verschließbar. Dieser ist als Labyrinthdeckel unter Ausbildung einer Labyrinthdichtungsanordnung 40 zwischen dem Innenraum des Getriebegehäuses 6 und Eingangswelle 7 bzw. einem drehfest mit diesem gekoppelten Bauteil ausgeführt.

Der Gehäusedeckel 15 ist über Befestigungselemente 41 mit einem Wandbereich des Getriebegehäuses 6 verbunden. Die Anordnung der Befestigungselemente 41 kann dabei mit konstantem Abstand zueinander in Umfangsrichtung oder unterschiedlichem Abstand erfolgen. Die Befestigung der koaxial zur Drehachse R der Eingangswelle 7 angeordneten Erdungseinrichtung 4 erfolgt im dargestellten Fall direkt am Gehäusedeckel 15. Figur 4a zeigt dazu zwei Verbindungsmöglichkeiten, die mit einer Erdungsringeinheit 9 gemäß Figur 4b ausgeführt werden können. Diese Ausführung, dargestellt in einer Ansicht A gemäß Figur 4a, entspricht hinsichtlich der Funktion der in der Figur 2a wiedergegebenen Ausführung einer Erdungseinrichtung 4 mit Durchgangsöffnungen 19. In Figur 4b ferner mit dargestellt ist der Gehäusedeckel 15.

Die oberhalb der Drehachse R im Axialschnitt dargestellte Verbindung 20 ist durch eine Schraubverbindung zwischen Erdungseinrichtung 4 und Gehäusedeckel 15 charakterisiert. Die Erdungseinrichtung 4, insbesondere die Erdungsringeinheit 9 wird an den Gehäusedeckel 15 angeschraubt. Dazu werden zumindest zwei, vorzugsweise eine Mehrzahl von Befestigungselementen durch die Durchgangsöffnungen an der Erdungseinrichtung 4 hindurchgeführt und mit jeweils einem Gewinde im Gehäusedeckel 15 in Wirkverbindung gebracht. Dazu ist am Gehäusedeckel 6 an der von der Getriebebaueinheit 3 in Einbaulage wegweisenden Seite eine Materialanhäufung 42 vorgesehen, in welche Sacklöcher eingearbeitet sind, in die ein Gewinde eingelassen ist. Die Materialanhäufung 42 kann lokal, d.h. in örtlich begrenzten Bereichen an der von der Getriebebaueinheit 3 in Einbaulage wegweisenden Stirnseite ausgebildet sein oder im einfachsten Fall als umlaufender ringförmiger Vorsprung.

Die unterhalb der Drehachse R der Eingangswelle 7 dargestellte Verbindung 21 kann mittels einzelnen in Umfangsrichtung beabstandet zueinander durch die Durchgangsöffnungen 19 an der Erdungseinrichtung 4 geführte und in Durchgangsöffnungen mit Gewinde am Gehäusedeckel 15 eingeschraubte Befestigungselemente realisiert werden.

Der ausgangsseitige Endbereich der Eingangswelle 7 ist über die Lageranordnung L2 im Getriebegehäuse 6 gelagert. Die Stützung von Außen- und Innenring der Lageranordnung L2 in axialer Richtung erfolgt durch ein scheibenförmiges, eine axiale Anschlagfläche für den Innenring bildendes und drehfest mit der Eingangswelle 7 verbundenes Bauteil 22 und einen Gehäusedeckel 23, welcher mit dem Getriebegehäuse 6 verbunden ist und eine axiale Anschlagfläche für den Außenring der Lageranordnung L2 bildet.

Das Getriebegehäuse 6 weist in Einbaulage betrachtet an der Unterseite 24 eine weitere Öffnung auf, die über einen Gehäusedeckel 25 verschließbar ist.

In der in der Figur 4a dargestellten Ausführung ist der eingangsseitig die Öffnung im Getriebegehäuse 6 für die Durchführung der Eingangswelle 7 verschließende Gehäusedeckel 15 an einer zur anzuschließenden Antriebsmaschine 2 weisenden Wandung 43 angeflanscht. Diese Wandung 43 ist über die axiale Erstreckung der Getriebebaueinheit 3 betrachtet in axialer Richtung gegenüber den Anlageflächen, insbesondere Lagerschild 11 zum Anflanschen der elektrischen Antriebsmaschine 2 zurückgesetzt.

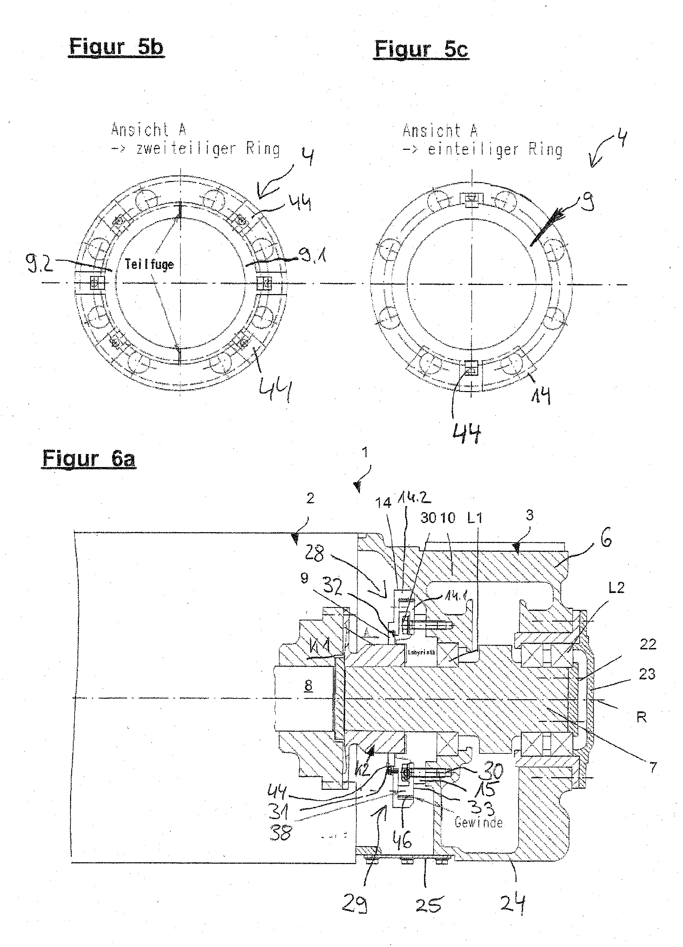

Bei allen in der Figur 4a und nachfolgend den Figuren 5a und 6a dargestellten Möglichkeiten kann die Anordnung des Gehäusedeckels 15 entweder am Getriebegehäuse 6 angeflanscht oder in diesem an einem Wandungsbereich befestigt erfolgen.

Die Figur 5a zeigt gegenüber Figur 4a anhand eines Axialschnittes zwei mögliche Ausführungen für Verbindungen zwischen Erdungseinrichtung 4 und Gehäusedeckel 15. Oberhalb der Drehachse R ist eine direkte Verbindung 26 und unterhalb eine Verbindung 27 über eine Adaptereinrichtung 14 in Form einer Halteeinrichtung im Axialschnitt dargestellt. Mögliche Ausführungen der Erdungseinrichtung 4 sind in der Ansicht A mit Gehäusedeckel 15 beispielhaft in den Figuren 5b und 5c wiedergegeben.

Die Erdungseinrichtung 4 kann gemäß Figur 5c einteilig und gemäß Figur 5b mehrteilig, vorzugsweise zweiteilig bestehend aus unter Ausbildung von Teilfugen in Umfangsrichtung benachbart angeordneten Erdungsringsegmenten 9.1, 9.2 ausgeführt sein. Beide Ausführungen sind durch an diesem vorgesehene, sich in radialer Richtung erstreckende und in regel- oder unregelmäßiger Anordnung in Umfangsrichtung weisende Halteklammern 44 charakterisiert. Die Halteklammern 44 sind durch zumindest zwei Bereiche charakterisiert, einem ersten Bereich zum Halten der Erdungseinrichtung 4, insbesondere der Erdungsringeinheit 9 und einem zweiten Bereich als Anschlussbereich zur Realisierung einer Verbindung mit einem Anschlusselement, insbesondere dem Gehäusedeckel 15.

Oberhalb der Drehachse R ist eine direkte Anbindung der Halteklammern 44 an den Gehäusedeckel 15 wiedergegeben. Die Kopplung im ersten Bereich mit der Erdungseinrichtung 4 erfolgt form- oder kraftschlüssig. Dies ist insbesondere von der Ausbildung der Halteklammern und der Erdungseinrichtung 4, insbesondere der Erdungsringeinheit 9 abhängig.

Unterhalb der Drehachse R ist eine indirekte Anbindung der Erdungseinrichtung 4 über eine Adaptereinrichtung 14 in Form einer Halteeinrichtung wiedergegeben. Die Adaptereinrichtung 14 ist über Verbindungselemente 45 mit dem Gehäusedeckel 15 und über diesen mit dem Getriebegehäuse 6 verbunden. Vorzugweise erfolgt in Funktionskonzentration die Verbindung der Adaptereinrichtung 14 direkt mit dem Getriebegehäuse 6 unter gleichzeitiger Verbindung des Gehäusedeckels 15 mit diesem. Die Halteklammern 44 sind an der Adaptereinrichtung 14 befestigt. Diese können in Analogie zu der oberhalb der Drehachse R dargestellten Ausbildung ausgeführt sein. Andere Ausführungen sind möglich. Auch hier weisen diese einen ersten Bereich zur Verbindung mit der Erdungseinrichtung 4 und einen zweiten Bereich zur Realisierung der Verbindung mit der Adaptereinrichtung 14 auf.

Die Figur 5b zeigt eine mögliche Erdungseinrichtung 4 gemäß Ansicht A in Figur 5a. Diese ist als Erdungsringeinheit 9 aus wenigstens zwei Erdungsringsegmenten 9.1, 9.2 ausgeführt. Jedes der Erdungsringsegmente 9.1, 9.2 ist über Halteklammern 44 mit der Adaptereinrichtung 14 (unterhalb der Drehachse R gemäß Figur 5a) oder dem Gehäusedeckel 15 (oberhalb der Drehachse R gemäß Figur 5a) verbunden.

Die Figur 5c verdeutlicht demgegenüber eine einteilige Ausführung der Erdungseinrichtung 4 als Erdungsringeinheit 9.

Die Figur 6a zeigt zwei weitere mögliche, indirekte Verbindungen 28 und 29 der Erdungseinrichtung 4 mit dem Gehäusedeckel 15 über eine Adaptereinrichtung 14 in Form einer Halterung anhand eines Axialschnittes durch die Getriebebaueinheit 3 in Einbaulage im Bereich der Durchführung der Eingangswelle 7 durch das Getriebegehäuse 6. Die oberhalb der Drehachse R dargestellte Verbindung 28 ist als Pressverbindung ausgeführt. Dazu ist die Adaptereinrichtung 14 drehfest mit dem Gehäusedeckel 15 über Verbindungselemente verbunden. Die Verbindung ist mit 30 bezeichnet. Die Adaptereinrichtung 14 weist eine in radialer Richtung weisende, in Umfangsrichtung um die Drehachse R verlaufende und zu dieser gerichtete Fläche 32 auf, die mit zumindest einem am Außenumfang 31 der Erdungseinrichtung 4 vorgesehenen, in Umfangsrichtung verlaufenden Flächenbereich unter Ausbildung eines Pressverbandes zusammenwirkt.

Bei dieser Ausführung sind die zur Verbindung vorgesehenen Flächenbereiche an Adaptereinrichtung 14 und Erdungseinrichtung 4, insbesondere Erdungsringeinheit 9 in Umfangsrichtung vollständig umlaufend und in radialer Richtung zueinander weisend mit den Toleranzen zur Realisierung einer Presspassung ausgeführt. Die Adaptereinrichtung 14 ist dazu durch einen Anschlussbereich 33 zur Verbindung mit dem Gehäusedeckel 15 und einem weiteren Verbindungsbereich zur Anbindung der Erdungseinrichtung 4 ausgeführt. Die Anschlussbereiche und von diesen gebildeten Anschlussflächen können dabei in Abhängigkeit von der Ausführung der gewählten Verbindung und Ausrichtung der Verbindungsmittel in gleicher Richtung oder unterschiedlicher Richtung zueinander ausgerichtet sein.

Im dargestellten Fall ist die Adaptereinrichtung 14 zweiteilig ausgeführt. Die einzelnen Adaptereinrichtungsteile 14.1, 14.2 sind über Verbindungsmittel miteinander verbunden. Im dargestellten Fall erfolgt die Verbindung 46 in radialer Richtung. Die einzelnen Adaptereinrichtungsteile 14.1, 14.2 weisen dazu beispielhaft an den zueinander weisenden Flächen im Verbindungsbereich komplementäre Gewinde zur Realisierung einer Relativbewegung in axialer und in Umfangsrichtung zueinander auf. Eine andere, hier nicht dargestellte Möglichkeit mit Relativbewegungsmöglichkeit in axialer Richtung ist durch zueinander komplementär ausgerichtete, in axialer Richtung verlaufende und in radialer Richtung weisende Verzahnungen, die ineinandergreifend ausgebildet sind, charakterisiert. Die Verzahnung ermöglicht eine Relativbewegung der Adaptereinrichtungsteile 14.1, 14.2 in axialer Richtung zueinander.

Zur Lagefixierung zueinander in Umfangsrichtung zueinander sind zusätzlich Verbindungsmittel 38 in Form von in axialer Richtung die beiden Adaptereinrichtungsteile 14.1, 14.2 miteinander verbindenden Befestigungselementen vorgesehen. Durch die Verbindung in radialer Richtung mit Relativbewegungsmöglichkeit in Umfangsrichtung unter gleichzeitiger Bewegung in axialer Richtung zueinander kann zum einen ein einfacher Lage- und Toleranzausgleich in Richtung parallel zur Drehachse R vorgenommen werden, ferner ist die Verbindung einfach lösbar.

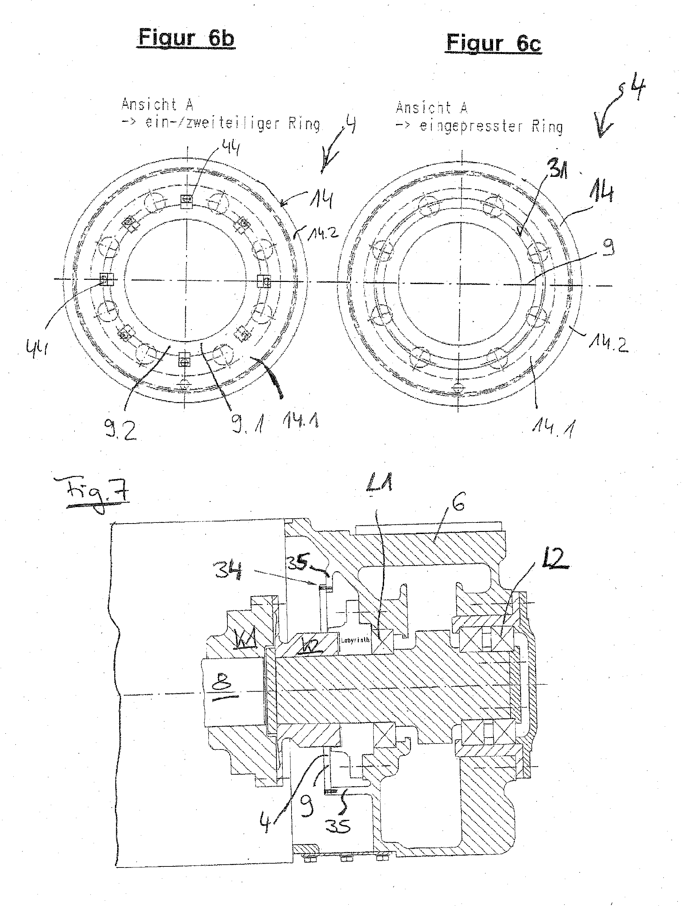

Die Erdungsringeinheit 9 ist im Fall der Realisierung einer Pressverbindung einteilig ausgeführt. Eine derartige Ausführung ist in einer Ansicht A in Figur 6c wiedergegeben.

Unterhalb der Drehachse R wird die Verbindung 29 zwischen Erdungseinrichtung 4 und Getriebegehäuse 6 über eine an dieses anschraubbare und in Umfangsrichtung gegenüber diesem verdrehbare Adaptereinrichtung 14 realisiert. Die Adaptereinrichtung 14 ist dazu in Analogie zur oberhalb der Drehachse R dargestellten Ausführung zweiteilig ausgeführt und die Verbindung 46 zwischen den Adaptereinrichtungsteilen 14.1, 14.2 ist derart ausgeführt, geeignet zu sein, eine Relativbewegung zwischen den Adaptereinrichtungsteilen in Umfangsrichtung als auch axialer Richtung zuzulassen. Vorzugsweise ist dazu die Verbindung 46 wie bereits für die oberhalb der Drehachse dargestellte Anordnung als Schraubverbindung über Gewinde ausgeführt. Die Befestigung der Erdungseinrichtung 4 an der Adaptereinrichtung 14 erfolgt hier beispielhaft über Halteklammern 44, die mittels Schraubverbindungen an dem Adaptereinrichtungsteil 14.2 befestigt sind.

Bei dieser Ausführung kann die Erdungseinrichtung 4 als einteilige Erdungsringeinheit 9 oder mehrteilig ausgeführt sein. Die mögliche ein- oder zeiteilige Ausführung ist beispielhaft in einer Ansicht A in der Figur 6b für eine Lösung der Befestigung der Erdungseinrichtung 4 mittels Halteklammern 44 wiedergegeben. Erkennbar sind ferner die Halteklammern 44 und die Adaptereinrichtung 14, insbesondere die Adaptereinrichtungseile 14.1, 14.2.

Bei Ausführungen mit zwei- oder mehrteiliger Erdungseinrichtung 4 ist eine einfache Demontage der Erdungsringeinrichtung 4 unter Abnahme der einzelnen Erdungsringsegmente 9.1, 9.2 möglich, indem die Verbindungen zwischen den Erdungsringsegmenten 9.1, 9.2 und der Adaptereinrichtung 14 durch Verdrehen der Adaptereinrichtung 14 beziehungsweise des den Verbindungsbereich mit der Erdungseinrichtung 4 bildenden Adaptereinrichtungsteil 14.2 in eine für das Angreifen von Werkzeugen geeignete Stellung erfolgt, beispielsweise eine Stellung in welcher ein Zugang über eine im Gehäuse enthaltene und über den Gehäusedeckel 25 verschließbare Öffnung möglich ist. Diese Möglichkeit bietet den Vorteil einer einfachen und schnellen Demontage ohne dass die Antriebsmaschine 2 von der Getriebebaueinheit gelöst werden muss.

Die Figur 7 zeigt eine nicht beanspruchte Ausführung der Verbindung 34 einer Erdungseinrichtung 4, insbesondere Erdungsringeinheit 9 mit einem Wandbereich 35 des Getriebegehäuses 6 in einer Ausführung mit in das Getriebegehäuse 6 integrierten Gehäusedeckel 15. Die Erdungseinrichtung 4 ist im dargestellten Fall als Erdungsringeinheit 9 ausgeführt und an der Wandung über Befestigungselemente befestigt. Neben der Möglichkeit der Befestigung über Befestigungselemente kann die Verbindung zwischen Erdungseinrichtung 5 und dem Wandbereich 35 auch über eine Pressverbindung, Halteklammern oder andere kraft- und/oder formschlüssige Verbindungen realisiert werden. Diesbezüglich bestehen keine Restriktionen. Ferner ist auch die nicht dargestellte Anbindung über eine Adaptereinrichtung 14 möglich.

Die erfindungsgemäße Lösung ist für jede Art von Antriebseinheiten 1 mit elektrischer Antriebsmaschine 2 und Getriebebaueinheit 3, insbesondere mit sich in der Getriebebaueinheit 3 abstützender Rotorwelle 8 aber auch in Verbindung mit Antriebsmaschinen mit eigener Lagerung einsetzbar. Die Antriebseinheit 1 kann dazu einen oder mehrere Abtriebe umfassen, die koaxial, parallel oder in einem Winkel zur Eingangswelle 7 angeordnet sein können. Bezüglich der Ausbildung der Getriebebaueinheit 3, insbesondere der einzelnen Drehmoment-/Drehzahlwandlungseinrichtungen besteht keine Restriktion. Bei diesen kann es sich beispielsweise um ein- oder mehrstufige, Zahn- oder Kegelradausführungen handeln. Vorteilhafte Anwendungen der Antriebseinheit sind Radantriebe von Fahrzeugen.

## Patentansprüche

1. Getriebebaueinheit (3), geeignet zur Kopplung mit einer elektrischen Antriebsmaschine (2) unter Ausbildung einer Antriebseinheit (1) mit
einem Getriebegehäuse (6);
- einer im Getriebegehäuse (6) über wenigstens eine Lageranordnung (L1, L2) gelagerten und mit einer elektrischen Antriebsmaschine (2) koppelbaren Eingangswelle (7);
- einer der Eingangswelle (7) zugeordneten und mittelbar mit dem Getriebegehäuse (6) verbundenen Erdungseinrichtung (4);
**dadurch gekennzeichnet,**
**dass** die Erdungseinrichtung (4) auf der Eingangsseite der Eingangswelle (7) in das Getriebegehäuse (6) in Kraftflussrichtung vor der ersten Lageranordnung (L1) angeordnet ist, wobei ein Gehäusedeckel (15) mit dem Getriebegehäuse (6) verbunden ist und zur Durchführung der Eingangswelle (7) dient, wobei die mittelbare Verbindung der Erdungseinrichtung (4) mit dem Getriebegehäuse (6) als Verbindung der Erdungseinrichtung (4) mit dem Gehäusedeckel (15) ausgeführt ist, wobei die Verbindung mit dem Gehäusedeckel (15) direkt oder indirekt über eine Adaptereinrichtung (14) ausgeführt ist.

2. Getriebebaueinheit (3) nach Anspruch 1,
**dadurch gekennzeichnet,**
**dass** die Erdungseinrichtung (4) zumindest ein Bauteil aus der nachfolgenden Gruppe umfasst:
- ein sich über wenigstens einen Teilbereich des Außenumfanges der Eingangswelle (7) oder eines drehfest mit dieser verbundenen Bauteiles in Umfangsrichtung, insbesondere einen Winkel von bis zu 180° erstreckendes Erdungsringsegment (9.1, 9.2);
- eine Erdungsringeinheit (9), gebildet aus einem in Umfangsrichtung geschlossenen ausgeführten Erdungsring (9) oder zumindest zwei in Umfangsrichtung unter Ausbildung einer Trennfuge benachbart angeordneten Erdungsringsegmenten (9.1, 9.2).

3. Getriebebaueinheit (3) nach einem der vorhergehenden Ansprüche,
**dadurch gekennzeichnet,**
**dass** ein Kupplungsteil (K2), geeignet zur Kopplung mit dem Rotor (8) einer elektrischen Antriebsmaschine (2) wenigstens mittelbar drehfest mit der Eingangswelle (7) verbunden ist und die Erdungseinrichtung (4) in axialer Richtung parallel zur Drehachse (R) der Eingangswelle (7) betrachtet zwischen Kupplungsteil (K2) und in Kraftflussrichtung erster Lageranordnung (L1) der Eingangswelle angeordnet ist.

4. Getriebebaueinheit (3) nach einem der vorhergehenden Ansprüche,
**dadurch gekennzeichnet,**
**dass** die Verbindung zwischen der Erdungseinrichtung (4) und dem Getriebegehäuse (6) oder der Adaptereinrichtung (14) und/oder die Verbindung der Adaptereinrichtung (14) mit dem Getriebegehäuse (6) derart ausgeführt ist, dass die Erdungseinrichtung (4) und/oder zumindest ein Teil der Adaptereinrichtung (14) relativ zum Getriebegehäuse (6) in axialer Richtung verschiebbar sind.

5. Getriebebaueinheit (3) nach einem der vorhergehenden Ansprüche,
**dadurch gekennzeichnet,**
**dass** zumindest eine Verbindung zweier Bauteile aus der Gruppe nachfolgend genannter Verbindungen
- Verbindung zwischen Getriebegehäuse (6) und Adaptereinrichtung (14);
- Verbindung zwischen Adaptereinrichtung (14) und Erdungseinrichtung (4);
- Verbindung zwischen Erdungseinrichtung (4) und Getriebegehäuse (6);
derart ausgeführt ist, geeignet zu sein, in einer ersten Funktionsstellung der beiden miteinander zu verbindenden Bauteile zueinander eine ortsfeste Verbindung zwischen diesen zu erzeugen und nach Lösen der ortsfesten Verbindung eine Relativbewegung der Adaptereinrichtung (14) und/oder der Erdungseinrichtung (4) in Umfangsrichtung um die Eingangswelle (7) in einem Winkelbereich bis zu 270° zu ermöglichen.

6. Getriebebaueinheit (3) nach einem der vorhergehenden Ansprüche,
**dadurch gekennzeichnet,**
**dass** die Verbindung zwischen Erdungseinrichtung (4) und Getriebegehäuse (6) oder Adaptereinrichtung (14) und/oder die Verbindung der Adaptereinrichtung (14) mit dem Getriebegehäuse (6) als eine Verbindung oder Kombination von Verbindungen aus folgender Gruppe ausgeführt ist:
- formschlüssige Verbindung
- kraftschlüssige Verbindung.

7. Getriebebaueinheit (3) nach Anspruch 6,
**dadurch gekennzeichnet,**
**dass** die kraftschlüssige Verbindung der Erdungseinrichtung (4) oder der Adaptereinrichtung (14) mit dem Getriebegehäuse (6) oder der Erdungseinrichtung (4) und der Adaptereinrichtung (14) entsprechend zumindest einer Merkmalskombination aus der nachfolgenden Gruppe ausgeführt ist:
- Pressverbindung;
- Schraubverbindung;
- Klemmverbindung.

8. Getriebebaueinheit (3) nach Anspruch 6,
**dadurch gekennzeichnet,**
**dass** die formschlüssige Verbindung der Erdungseinrichtung (4) oder der Adaptereinrichtung (14) mit dem Getriebegehäuse (6) oder der Erdungseinrichtung (4) und der Adaptereinrichtung (14) entsprechend zumindest einer Merkmalskombination aus der nachfolgenden Gruppe ausgeführt ist:
- in Umfangsrichtung der Eingangswelle betrachtet einseitig wirkender Formschluss;
- in Umfangsrichtung der Eingangswelle betrachtet beidseitig wirkender Formschluss;
- Klipp- oder Schnappverbindung.

9. Getriebebaueinheit (3) nach einem der vorhergehenden Ansprüche,
**dadurch gekennzeichnet,**
**dass** der Gehäusedeckel (15) als Labyrinthdeckel unter Ausbildung eines Labyrinths zwischen der Lagerumgebung der ersten Lageranordnung (L1) und der Eingangswelle (7) und/oder einem mit diesem drehfest verbundenen Bauteil ausgeführt ist.

10. Antriebseinheit (3) für ein Fahrzeug, insbesondere ein schienengebundenes Fahrzeug, umfassend eine elektrische Antriebsmaschine (2) mit einem Rotor (8) und einer Getriebebaueinheit (2) gemäß einem der Ansprüche 1 bis 10.

11. Antriebseinheit (3) nach Anspruch 10,
**dadurch gekennzeichnet,**
**dass** der Rotor (8) auf der Antriebsseite frei von einer Lagerung im Gehäuse (10) der elektrischen Antriebsmaschine (2) ist und mit der Getriebebaueinheit (2) unter Abstützung über die erste Lageranordnung (L1) im Getriebegehäuse (6) verbindbar ist.

12. Antriebseinheit (1) nach Anspruch 10,
**dadurch gekennzeichnet,**
**dass** die elektrische Antriebsmaschine (2) eine eigene Rotorlagerung aufweist und die elektrische Antriebsmaschine (2) über eine Ausgleichskupplung, insbesondere Bogenzahnkupplung mit der Getriebebaueinheit (3) verbunden ist.

13. Antriebseinheit (1) nach einem der Ansprüche 10 bis 12,
**dadurch gekennzeichnet,**
**dass** die Getriebebaueinheit (3) ein Drehzahl-/Drehmomentwandlungseinrichtung und wenigstens einen Abtrieb umfasst, und der Abtrieb mit einer Radantriebswelle koppelbar ist.

14. Antriebseinheit (1) nach Anspruch 13,
**dadurch gekennzeichnet,**
**dass** die Getriebebaueinheit (3) ein Stirnradgetriebe und/oder Kegelradgetriebe umfasst und der Abtrieb direkt oder über eine Kupplungseinrichtung mit einer Radantriebswelle koppelbar ist.

## Claims

1. Gear mechanism unit (3), suitable for coupling to an electric drive machine (2) with the configuration of a drive unit (1), having
- a gear mechanism housing (6);
- an input shaft (7) which is mounted in the gear mechanism housing (6) via at least one bearing arrangement (L1, L2) and can be coupled to an electric drive machine (2);
- a grounding device (4) which is assigned to the input shaft (7) and is connected indirectly to the gear mechanism housing (6);
**characterized**
**in that** the grounding device (4) is arranged on the inlet side of the input shaft (7) into the gear mechanism housing (6) upstream of the first bearing arrangement (L1) in the power flow direction, a housing cover (15) being connected to the gear mechanism housing (6) and serving for leading through the input shaft (7),
the indirect connection of the grounding device (4) to the gear mechanism housing (6) being configured as a connection of the grounding device (4) to the housing cover (15), the connection to the housing cover (15) being configured directly or indirectly via an adapter device (14).

2. Gear mechanism unit (3) according to Claim 1,
**characterized**
**in that** the grounding device (4) comprises at least one component from the following group:
- a grounding ring segment (9.1, 9.2) which extends in the circumferential direction, in particular over an angle of up to 180°, over at least a part region of the outer circumference of the input shaft (7) or a component which is connected to the latter so as to rotate with it;
- a grounding ring unit (9), formed from a grounding ring (9) which is of closed configuration in the circumferential direction or at least two grounding ring segments (9.1, 9.2) which are arranged adjacently in the circumferential direction with the configuration of a parting line.

3. Gear mechanism unit (3) according to either of the preceding claims,
**characterized**
**in that** a coupling part (K2), suitable for coupling to the rotor (8) of an electric drive machine (2), is at least indirectly connected fixedly to the input shaft (7) so as to rotate with it, and the grounding device (4) is arranged between the coupling part (K2) and the first (in the power flow direction) bearing arrangement (L1) of the input shaft as viewed in the axial direction parallel to the rotational axis (R) of the input shaft (7).

4. Gear mechanism unit (3) according to one of the preceding claims,
**characterized**
**in that** the connection between the grounding device (4) and the gear mechanism housing (6) or the adapter device (14) and/or the connection of the adapter device (14) to the gear mechanism housing (6) are/is configured in such a way that the grounding device (4) and/or at least one part of the adapter device (14) can be displaced in the axial direction relative to the gear mechanism housing (6).

5. Gear mechanism unit (3) according to one of the preceding claims,
**characterized**
**in that** at least one connection of two components from the group of connections which are mentioned in the following text:
- connection between the gear mechanism housing (6) and the adapter device (14);
- connection between the adapter device (14) and the grounding device (4);
- connection between the grounding device (4) and the gear mechanism housing (6);
is configured so as to be suitable, in a first functional position of the two components to be connected to one another, for producing a stationary connection between the said components with respect to one another and, after releasing of the stationary connection, for enabling a relative movement of the adapter device (14) and/or the grounding device (4) in the circumferential direction around the input shaft (7) in an angular range of up to 270°.

6. Gear mechanism unit (3) according to one of the preceding claims,
**characterized**
**in that** the connection between the grounding device (4) and the gear mechanism housing (6) or the adapter device (14) and/or the connection of the adapter device (14) to the gear mechanism housing (6) are/is configured as a connection or combination of connections from the following group:
- positively locking connection
- non-positive connection.

7. Gear mechanism unit (3) according to Claim 6,
**characterized**
**in that** the non-positive connection of the grounding device (4) or the adapter device (14) to the gear mechanism housing (6) or the grounding device (4) and the adapter device (14) is configured in accordance with at least one feature combination from the following groups:
- press-fit connection;
- screwed connection;
- clamped connection.

8. Gear mechanism unit (3) according to Claim 6,
**characterized**
**in that** the positively locking connection of the grounding device (4) or the adapter device (14) to the gear mechanism housing (6) or the grounding device (4) and the adapter device (14) is configured in accordance with at least one feature combination from the following group:
- positively locking connection which acts on one side as viewed in the circumferential direction of the input shaft;
- positively locking connection which acts on both sides as viewed in the circumferential direction of the input shaft;
- clip or snap-action connection.

9. Gear mechanism unit (3) according to one of the preceding claims,
**characterized**
**in that** the housing cover (15) is configured as a labyrinth cover with the configuration of a labyrinth between the bearing surroundings of the first bearing arrangement (L1) and the input shaft (7) and/or a component which is connected fixedly thereto so as to rotate with it.

10. Drive unit (3) for a vehicle, in particular a rail-borne vehicle, comprising an electric drive machine (2) with a rotor (8) and a gear mechanism unit (2) according to one of Claims 1 to 10.

11. Drive unit (3) according to Claim 10,
**characterized**
**in that** the rotor (8) is free from a bearing in the housing (10) of the electric drive machine (2) on the drive side and can be connected to the gear mechanism unit (2) with support via the first bearing arrangement (L1) in the gear mechanism housing (6).

12. Drive unit (1) according to Claim 10,
**characterized**
**in that** the electric drive machine (2) has a dedicated rotor bearing, and the electric drive machine (2) is connected to the gear mechanism unit (3) via a compensating coupling, in particular a curved tooth coupling.

13. Drive unit (1) according to one of Claims 10 to 12,
**characterized**
**in that** the gear mechanism unit (3) comprises a rotational speed/torque conversion device and at least one output, and the output can be coupled to a wheel drive shaft.

14. Drive unit (1) according to Claim 13,
**characterized**
**in that** the gear mechanism unit (3) comprises a spur gear mechanism and/or bevel gear mechanism, and the output can be coupled to a wheel drive shaft directly or via a coupling device.

## Revendications

1. Unité de transmission (3), apte à être accouplée à une machine d'entraînement électrique (2) en formant une unité d'entraînement (1) avec un boîtier de transmission (6) ;
- un arbre d'entrée (7) supporté dans le boîtier de transmission (6) par le biais d'au moins un agencement de palier (L1, L2) et pouvant être accouplé à une machine d'entraînement électrique (2) ;
- un dispositif de mise à la terre (4) associé à l'arbre d'entrée (7) et connecté indirectement au boîtier de transmission (6) ;
**caractérisée en ce que**
le dispositif de mise à la terre (4) est disposé du côté de l'entrée de l'arbre d'entrée (7) dans le boîtier de transmission (6) dans la direction du flux de forces avant le premier agencement de palier (L1), un couvercle de boîtier (15) étant connecté au boîtier de transmission (6) et servant au passage de l'arbre d'entrée (7),
la connexion indirecte du dispositif de mise à la terre (4) au boîtier de transmission (6) étant réalisée sous forme de connexion du dispositif de mise à la terre (4) au couvercle de boîtier (15), la connexion au couvercle de boîtier (15) étant réalisée directement ou indirectement par le biais d'un dispositif d'adaptateur (14).

2. Unité de transmission (3) selon la revendication 1,
**caractérisée en ce que**
le dispositif de mise à la terre (4) comprend au moins un composant parmi le groupe suivant :
- un segment de bague de mise à la terre (9.1, 9.2) s'étendant sur au moins une région partielle de la périphérie extérieure de l'arbre d'entrée (7) ou d'un composant connecté de manière solidaire en rotation à celui-ci dans la direction périphérique, en particulier sur un angle allant jusqu'à 180° ;
- une unité annulaire de mise à la terre (9) formée d'une bague de mise à la terre (9) réalisée sous forme fermée dans la direction périphérique, ou d'au moins deux segments de bague de mise à la terre (9.1, 9.2) disposés l'un à côté de l'autre dans la direction périphérique en formant un joint de séparation.

3. Unité de transmission (3) selon l'une quelconque des revendications précédentes,
**caractérisée en ce**
**qu'**une partie d'accouplement (K2), appropriée pour l'accouplement au rotor (8) d'une machine d'entraînement électrique (2), est connectée au moins indirectement de manière solidaire en rotation à l'arbre d'entrée (7) et le dispositif de mise à la terre (4) est disposé, vu dans la direction axiale parallèlement à l'axe de rotation (R) de l'arbre d'entrée (7), entre la partie d'accouplement (K2) et dans la direction du flux de forces du premier agencement de palier (L1) de l'arbre d'entrée.

4. Unité de transmission (3) selon l'une quelconque des revendications précédentes,
**caractérisée en ce que**
la connexion entre le dispositif de mise à la terre (4) et le boîtier de transmission (6) ou le dispositif d'adaptateur (14), et/ou la connexion du dispositif d'adaptateur (14) au boîtier de transmission (6) est réalisée de telle sorte que le dispositif de mise à la terre (4) et/ou au moins une partie du dispositif d'adaptateur (14) puissent être déplacés dans la direction axiale par rapport au boîtier de transmission (6).

5. Unité de transmission (3) selon l'une quelconque des revendications précédentes,
**caractérisée en ce**
**qu'**il est réalisé au moins une connexion de deux composants parmi le groupe de connexions citées suivant :
- une connexion entre le boîtier de transmission (6) et le dispositif d'adaptateur (14) ;
- une connexion entre le dispositif d'adaptateur (14) et le dispositif de mise à la terre (4) ;
- une connexion entre le dispositif de mise à la terre (4) et le boîtier de transmission (6) ;
de telle sorte qu'elles soient appropriées, dans une première position fonctionnelle des deux composants devant être connectés l'un à l'autre, pour établir une connexion fixe entre ceux-ci, et après la libération de la connexion fixe, pour permettre un mouvement relatif du dispositif d'adaptateur (14) et/ou du dispositif de mise à la terre (4) dans la direction périphérique autour de l'arbre d'entrée (7) dans une plage angulaire allant jusqu'à 270°.

6. Unité de transmission (3) selon l'une quelconque des revendications précédentes,
**caractérisée en ce que**
la connexion entre le dispositif de mise à la terre (4) et le boîtier de transmission (6) ou le dispositif d'adaptateur (14) et/ou la connexion du dispositif d'adaptateur (14) au boîtier de transmission (6) est réalisée sous forme de connexion ou de combinaison de connexions parmi le groupe suivant :
- une connexion par engagement par correspondance de formes,
- une connexion par engagement par force.

7. Unité de transmission (3) selon la revendication 6,
**caractérisée en ce que**
la connexion par engagement par force du dispositif de mise à la terre (4) ou du dispositif d'adaptateur (14) au boîtier de transmission (6) ou du dispositif de mise à la terre (4) et du dispositif d'adaptateur (14) est réalisée suivant au moins une combinaison de caractéristiques parmi le groupe suivant :
- une connexion par pressage ;
- une connexion par vissage ;
- une connexion par serrage.

8. Unité de transmission (3) selon la revendication 6,
**caractérisée en ce que**
la connexion par engagement par correspondance de formes du dispositif de mise à la terre (4) ou du dispositif d'adaptateur (14) au boîtier de transmission (6) ou du dispositif de mise à la terre (4) et du dispositif d'adaptateur (14) est réalisée suivant au moins une combinaison de caractéristiques parmi le groupe suivant :
- un engagement par correspondance de formes agissant d'un côté, vu dans la direction périphérique de l'arbre d'entrée ;
- un engagement par correspondance de formes agissant des deux côtés, vu dans la direction périphérique de l'arbre d'entrée ;
- une connexion par encliquetage ou emboîtement.

9. Unité de transmission (3) selon l'une quelconque des revendications précédentes,
**caractérisée en ce que**
le couvercle de boîtier (15) est réalisé sous forme de couvercle à labyrinthe en formant un labyrinthe entre l'environnement du palier du premier agencement de palier (L1) et l'arbre d'entrée (7) et/ou un composant connecté de manière solidaire en rotation à celui-ci.

10. Unité d'entraînement (3) pour un véhicule, en particulier un véhicule ferroviaire, comprenant une machine d'entraînement électrique (2) avec un rotor (8) et une unité de transmission (2) selon l'une quelconque des revendications 1 à 10.

11. Unité d'entraînement (3) selon la revendication 10,
**caractérisée en ce que**
le rotor (8) du côté de l'entraînement est libre d'un support sur palier dans le boîtier (10) de la machine d'entraînement électrique (2) et peut être connecté à l'unité de transmission (2) en étant supporté par le biais du premier agencement de palier (L1) dans le boîtier de transmission (6).

12. Unité d'entraînement (1) selon la revendication 10,
**caractérisée en ce que**
la machine d'entraînement électrique (2) présente un support sur palier de rotor propre et la machine d'entraînement électrique (2) est connectée à l'unité de transmission (3) par le biais d'un accouplement compensateur, en particulier d'un accouplement à dents courbées.

13. Unité d'entraînement (1) selon l'une quelconque des revendications 10 à 12,
**caractérisée en ce que**
l'unité de transmission (3) comprend un dispositif de convertisseur de régime/couple et au moins une prise de force, et la prise de force peut être accouplée à un arbre d'entraînement de roue.

14. Unité d'entraînement (1) selon la revendication 13,
**caractérisée en ce que**
l'unité de transmission (3) comprend une transmission à pignons droits et/ou une transmission à pignons coniques et la prise de force peut être accouplée directement ou par le biais d'un dispositif d'accouplement à un arbre d'entraînement de roue.
